# EUROPEAN PATENT APPLICATION

(11) **EP 4 755 528 A1**
(43) Date of publication of application: **10.06.2026**
(21) Application number: 25827382.0
(22) Date of filing: 24.06.2025
(51) Int. Cl.: B05C 5/02, H01M 4/04

(54) **SLOT DIE DEVICE**

(30) Priority: 26.06.2024 KR 20240083654
(71) Applicant: LG Energy Solution, Ltd., Seoul 07335 (KR)
(72) Inventor: KIM, Won Hwi, Daejeon 34122 (KR); PARK, Sang Won, Daejeon 34122 (KR); KIM, Sang Min, Daejeon 34122 (KR); MOON, Young Gyu, Daejeon 34122 (KR)
(74) Representative: Plasseraud IP
(86) International application number: PCT/KR2025/008738
(87) International publication number: WO 2026/005417

(57) **Abstract**

Disclosed herein relates to a slot die device that simultaneously discharges main slurry and sub-slurry, including: a die part comprising a first die comprising a manifold to which a main slurry is supplied and a second die coupled to the first die; and a shim part interposed between the first die and second die, forming a gap between the first die and second die through which slurry is discharged, wherein the shim part includes: a main shim plate guiding a movement of the main slurry; and at least one sub-shim plate guiding a movement of the sub-slurry, wherein the sub-shim plate is provided to cover a portion of the manifold.

## Description

### [Technical Field]

The present disclosure relates to a slot die device, and more specifically, to a slot die device capable of simultaneously discharging two or more different types of slurry.

This application claims the benefit of priority to Korean Patent Application No. 10-2024-0083654, filed on June 26, 2024, and the entire contents of Korean Patent Application No. 10-2024-0083654 are hereby incorporated by reference.

### [Background]

Rechargeable secondary batteries are attracting attention as a power source for devices requiring high power and large capacity, including electric vehicles, hybrid electric vehicles, and plug-in hybrid electric vehicles, which are proposed as solutions to address air pollution from existing gasoline and diesel vehicles using fossil fuels.

Representatively, in terms of battery shape, there is high demand for prismatic secondary batteries and pouch-type secondary batteries, which can be applied to products like mobile phones due to their thin thickness. In terms of materials, there is high demand for lithium secondary batteries, such as lithium-ion batteries and lithium-ion polymer batteries, which offer advantages like high energy density, discharge voltage, and output stability.

Secondary batteries have a structure where an electrode assembly consisting of electrodes and a separator, along with an electrolyte, are stored together within a battery case.

Typically, electrodes are manufactured by applying a sheet-type current collector with a slurry containing active material. For this application process, slot die devices are most commonly used.

Meanwhile, there is a growing trend toward using slot die devices with a structure capable of simultaneously discharging an insulating liquid along with a slurry including an active material to control the loading amount of the active material coated on the current collector and achieve partial insulation.

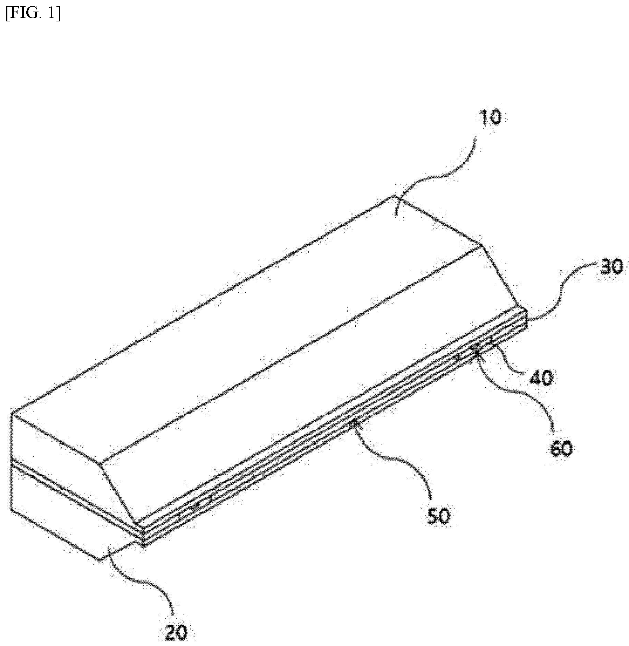

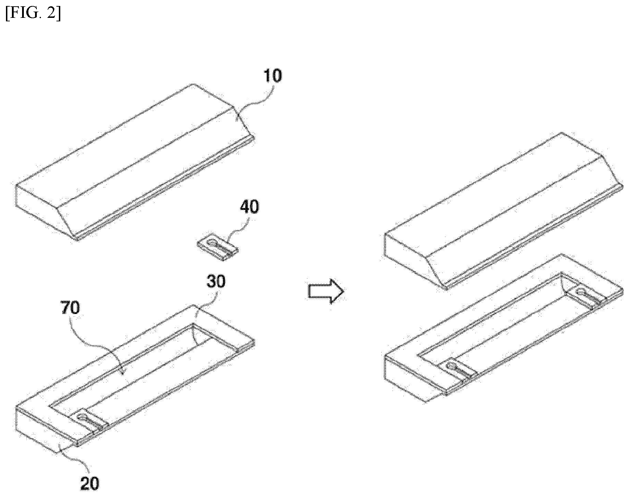

FIG. 1 is a perspective view of a conventional slot die device that simultaneously discharges the active material slurry and the insulating liquid, and FIG. 2 is an exploded perspective view of the slot die device of FIG. 1.

The conventional slot die device fundamentally discharges the active material slurry through the gap between the upper die 10 and the lower die 20. A main shim plate 30 and a sub-shim plate 40 are interposed between the upper die 10 and the lower die 20. The active material slurry is discharged through the main discharge port 50 formed by the main shim plate 30, and the insulating liquid is discharged through the sub discharge port 60 formed by the sub-shim plate 40.

Specifically, the active material slurry is introduced through the manifold 70 of the lower die 20 shown in FIG. 2, guided by the main shim plate 30, and discharged outward through the forward main discharge port 50. Furthermore, the insulating liquid is introduced through a separate inlet path (not shown), guided by the sub-shim plate 40, and moves to the front sub discharge port 60 before being discharged externally.

Through this method, different types of slurries can be discharged simultaneously from a single slot die device.

A slot die device with the above structure requires a process to adjust the end positions of the main shim plate 30 and the sub-shim plate 40.

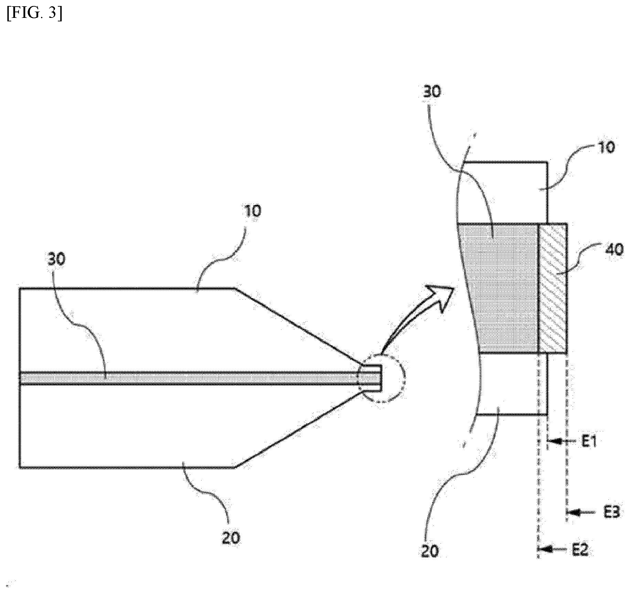

FIG. 3 is a side view of the slot die device of FIG. 1, showing that the main shim plate 30 and sub-shim plate 40 are moved forward and backward relative to the end positions of the upper die 10 and lower die 20 to adjust to an optimal position.

The sub-shim plate 40 is coupled to either the upper die 10 or the lower die 20 via a separate coupling member 90. In this case, the sub-shim plate 40 is formed with a coupling hole 80 in which the coupling member 90 is coupled to extend lengthwise in one direction to allow adjustment of its end position.

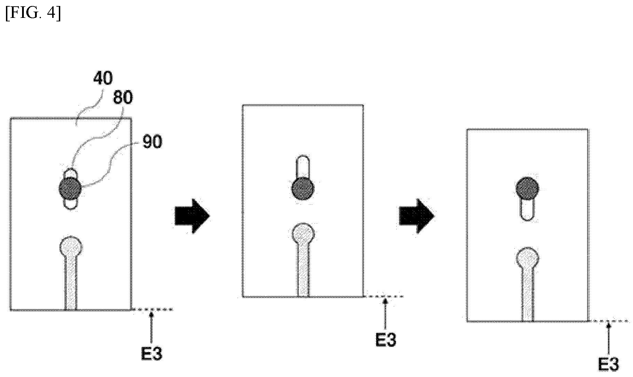

FIG. 4 is a plan view of the sub-shim plate 40 included in FIG. 1. The sub-shim plate 40 includes a linearly formed coupling hole 80, and a coupling member 90 is coupled to the coupling hole 80. The coupling member 90 passes through the coupling hole 80 and is coupled to either the upper die 10 or the lower die 20 to fix the sub-shim plate 40.

The sub-shim plate 40 slides forward and backward around the coupling member 90, as shown in FIG. 4.

However, slot die devices with the above structure had no solution for the problem of active material slurry leakage through the minute gap between the main shim plate 30 and the sub-shim plate 40.

### [Summary]

### [Technical Problem]

Therefore, the present disclosure was conceived to solve the above problems, aiming to provide a slot die device with a structure that minimizes slurry leakage and can simultaneously discharge two or more different types of slurry.

It also aims to provide a slot die device with a slurry flow advantageously designed.

Other objectives and advantages of the present disclosure will be understood from the following description and will become clearer through the embodiments of the present disclosure. Furthermore, it will be readily apparent that the objectives and advantages of the present disclosure can be instantiated by the means and combinations set forth in the appended claims.

### [Technical Solution]

According to the present disclosure, a slot die device for simultaneously discharging main slurry and sub-slurry is provided.

The slot die device includes: a die part comprising a first die comprising a manifold to which a main slurry is supplied and a second die coupled to the first die; and a shim part interposed between the first die and second die, forming a gap between the first die and second die through which slurry is discharged, wherein the shim part includes: a main shim plate guiding a movement of the main slurry; and at least one sub-shim plate guiding a movement of the sub-slurry, wherein the sub-shim plate is provided to cover a portion of the manifold.

The sub-shim plate includes a guide groove, and the sub-slurry may move through the guide groove.

The sub-shim plate further includes a buffer groove on a surface facing the manifold, wherein the buffer groove may have one open side.

The buffer groove may be formed on a portion of one surface of the sub-shim plate facing the manifold that covers the manifold.

The buffer groove may be formed by machining a portion of the sub-shim plate corresponding to the manifold to create a step.

The buffer groove may be formed on a surface opposite to the surface where the guide groove is formed.

The buffer groove includes a front step surface formed at a position corresponding to a front end of the die part, and a rear step surface opposing the front step surface, wherein the front step surface may be inclined in a horizontal direction.

The gap between the front step surface and the rear step surface may increase toward the open side.

The main shim plate includes: a support part corresponding to a rear end of the die part; a first guide part corresponding to one side of the die part and formed extending from one end of the support part; and a second guide part corresponding to the other side of the die part and formed extending from the other end of the support part, wherein the sub-shim plate may be positioned between the first guide part and the second guide part.

The sub-shim plate may be coupled to the first die in contact with the main shim plate.

### [Advantageous Effects]

According to the present disclosure, the quality of coating can be improved when coating two or more different types of slurry.

### [Brief Description of the Drawings]

FIG. 1 is a perspective view of a conventional slot die device.
FIG. 2 is an exploded perspective view of the slot die device of FIG. 1.
FIG. 3 is a side view of the slot die device of FIG. 1.
FIG. 4 is a plan view of the sub-shim plate included in FIG. 1.
FIG. 5 is an example of an exploded perspective view of a slot die device according to a first embodiment of the present disclosure.
FIG. 6 is another example of an exploded perspective view of a slot die device according to the first embodiment of the present disclosure.
FIG. 7 is another example of an exploded perspective view of a slot die device according to the first embodiment of the present disclosure.
FIG. 8 is a plan view of the shim part and first die of FIG. 7.
FIG. 9 is a perspective view of the sub-shim plate included in the slot die device according to the first embodiment of the present disclosure.
FIG. 10 is a schematic diagram briefly showing the coupling of the sub-shim plate and the first die.
FIG. 11 is an example of an exploded perspective view of a slot die device according to a second embodiment of the present disclosure.
FIG. 12 is another example of an exploded perspective view of a slot die device according to a second embodiment of the present disclosure.
FIG. 13 is another example of an exploded perspective view of a slot die device according to a second embodiment of the present disclosure.
FIG. 14 is a cross-sectional view of the slot die device according to the second embodiment of the present disclosure, cut in the width direction.
FIG. 15 is a perspective view and a bottom perspective view of the sub-shim plate included in the slot die device according to the second embodiment of the present disclosure.
FIG. 16 is a plan view of the sub-shim plate of FIG. 15.
FIG. 17 is a bottom perspective view of the sub-shim plate included in the slot die device according to the third embodiment of the present disclosure.
FIG. 18 is a plan view of the sub-shim plate of FIG. 17.
FIG. 19 is a plan view of the first die and shim part in a slot die device according to the third embodiment of the present disclosure.
FIG. 20 is a plan view of the first die and shim part in a slot die device according to the fourth embodiment of the present disclosure.

### [Best Mode for Carrying out the Disclosure]

Hereinafter, a preferred embodiment of the present disclosure will be described in detail with reference to the accompanying drawings. Prior to this, it should be noted that the terms and words used in this specification and the claims should not be interpreted as limited to their conventional or dictionary meanings, and should be interpreted in a meaning and concept consistent with the technical concept of the present disclosure, based on the principle that an inventor may appropriately define the concepts of terms to describe their own invention in the best possible manner.

Therefore, it should be understood that the embodiments described herein and the configurations illustrated in the drawings are merely preferred embodiments of the present disclosure and do not represent all possible technical concepts of the present disclosure. Thus, various equivalents and modifications may exist at the time of filing this application.

Furthermore, when describing the present disclosure, detailed explanations of related prior art components or functions are omitted if they are deemed likely to obscure the essence of the present disclosure.

The embodiments of the present disclosure are provided to more fully explain the present disclosure to those skilled in the art. Therefore, the shapes and sizes of components in the drawings may be exaggerated, omitted, or shown schematically for clearer explanation. Consequently, the sizes or proportions of each component do not necessarily reflect their actual sizes or proportions.

In the present disclosure, "slit" collectively refers to a through-hole having a shape with a long axis extending in one direction and a short axis perpendicular to the long axis, including cases where the shape is rectangular, elliptical, or bead-shaped.

The present disclosure relates to a slot die device, and more specifically, to a slot die device that simultaneously discharges a main slurry and a sub-slurry.

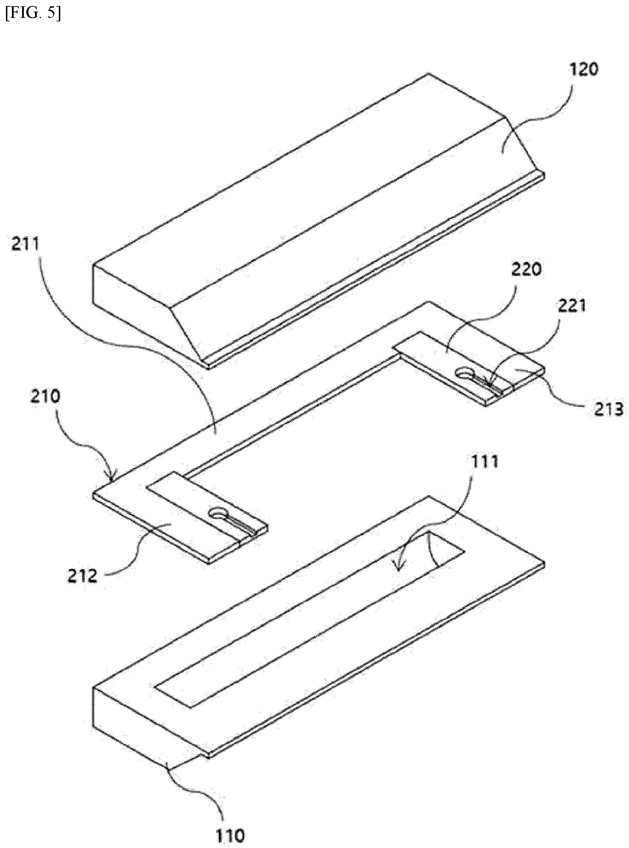

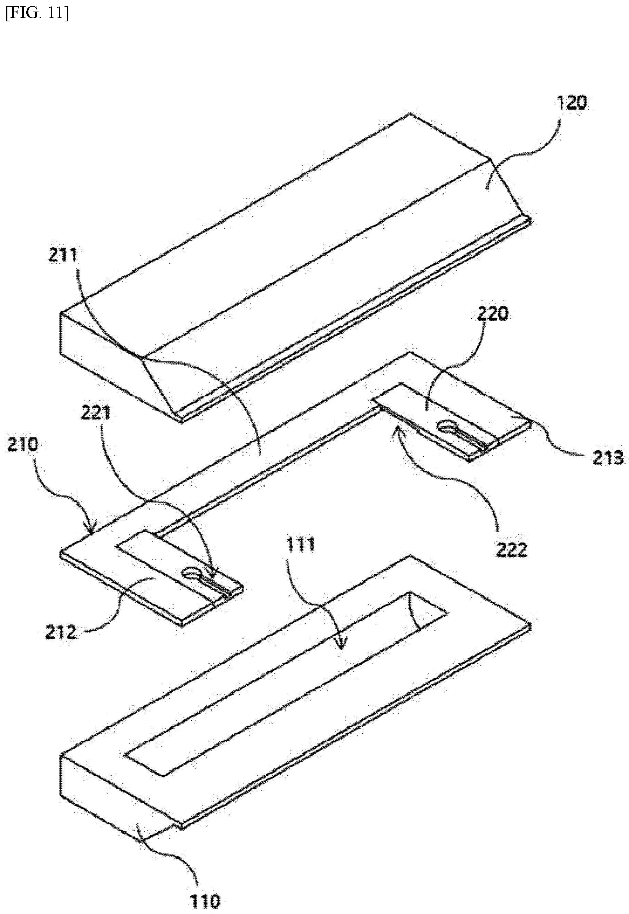

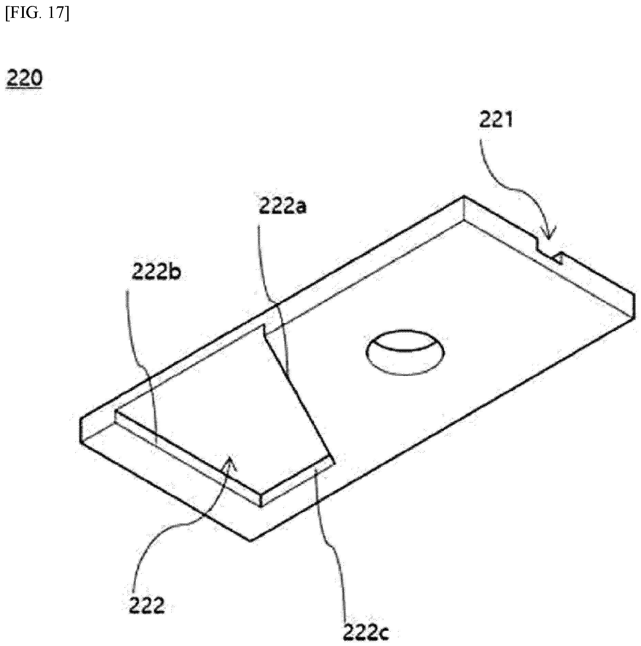

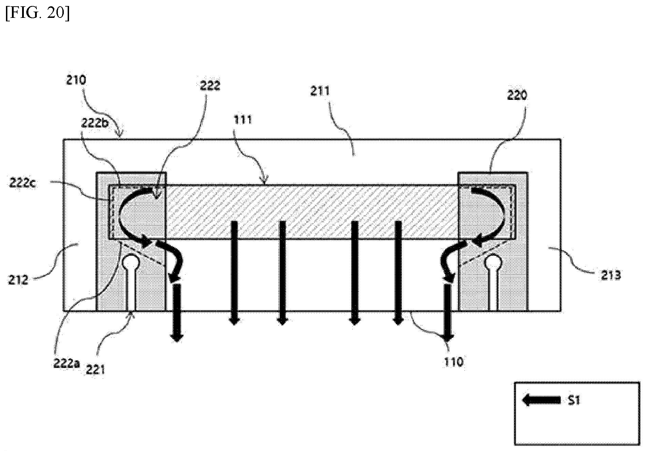

FIGS. 5 to 10 relate to a slot die device according to a first embodiment of the present disclosure, FIGS. 11 to 16 relate to a slot die device according to a second embodiment of the present disclosure, FIGS. 17 to 19 relate to a slot die device according to a third embodiment of the present disclosure, and FIG. 20 relates to a slot die device according to a fourth embodiment of the present disclosure.

Hereinafter, with reference to the accompanying drawings, the specific embodiments of the slot die device of the present disclosure will be described in detail. For reference, the directions such as front/rear or up/down/left/right used in the following description to specify relative positions are for the purpose of facilitating understanding of the disclosure and, unless otherwise defined, are based on the directions shown in the drawings.

Furthermore, the longitudinal direction of any component is defined as the direction corresponding to the surface of the component having the longest length as shown in the drawings relative to the horizontal direction, and the width direction of any component is defined as the direction perpendicular to the longitudinal direction relative to the horizontal direction.

In the present disclosure, the width direction of the slot die device corresponds to the direction in which the slurry is discharged, and the longitudinal direction of the slot die device is defined as the direction perpendicular to the width direction of the slot die device.

### (First embodiment)

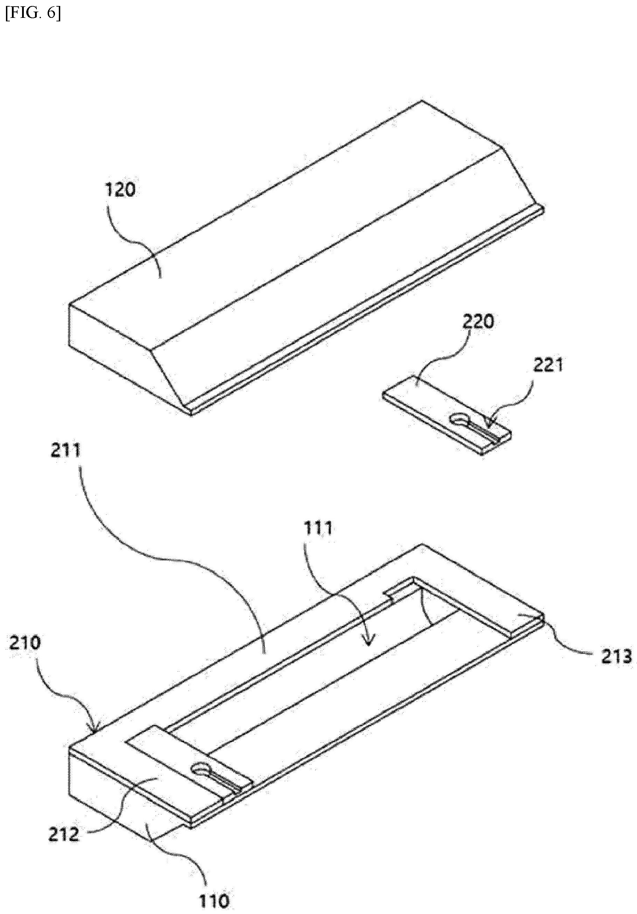

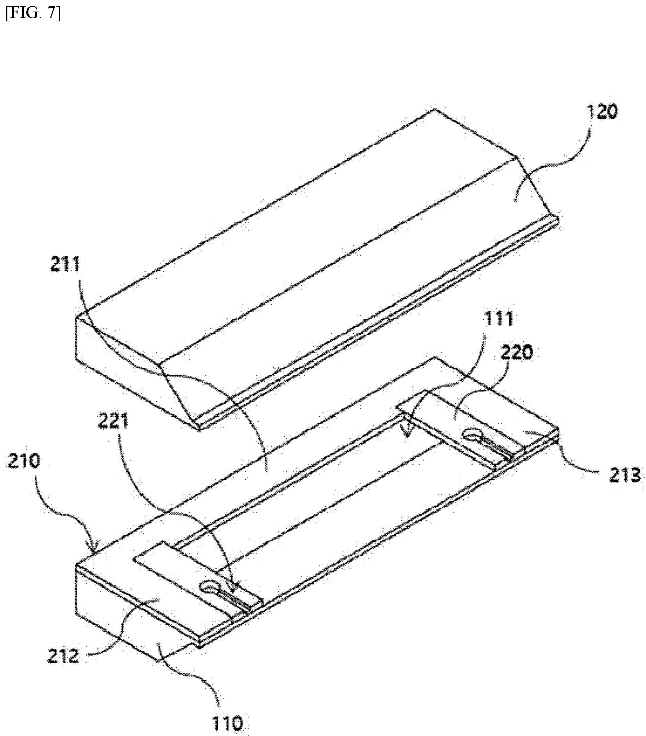

FIG. 5 is one example of an exploded perspective view of a slot die device according to the first embodiment of the present disclosure. FIG. 6 is another example of an exploded perspective view of a slot die device according to the first embodiment of the present disclosure. FIG. 7 is yet another example of an exploded perspective view of a slot die device according to the first embodiment of the present disclosure.

The slot die device of the present disclosure includes a die part including a first die 110 and a second die 120, as shown in FIGS. 5 to 7, and a shim part interposed between the first die 110 and the second die 120.

The first die 110 includes a manifold 111 to which the main slurry is supplied.

The second die 120 is formed corresponding to the first die 110 and is coupled to the first die 110 to cover the manifold 111 of the first die 110.

The main slurry flows in through the manifold 111, fills the cavity, and then moves through the gap between the first die 110 and the second die 120.

The shim part forms a gap between the first die 110 and the second die 120 through which the slurry is discharged.

The shim part specifically includes a main shim plate 210 guiding the movement of the main slurry and at least one sub-shim plate 220 guiding the movement of the sub-slurry.

The main shim plate 210 is interposed between the first die 110 and the second die 120 to form the gap and serves to guide the movement of the main slurry through the manifold 111.

The main shim plate 210 includes a support part 211, a first guide part 212, and a second guide part 213.

The support part 211 is formed corresponding to the rear end of the die part and prevents the main slurry moving through the manifold 111 of the first die 110 from flowing out toward the rear end of the die part.

The first guide part 212 corresponds to one side of the die part and is formed extending from one end of the support part 211.

The first guide part 212 serves to prevent the main slurry from flowing out to one side of the die part. Furthermore, the first guide part 212 guides the main slurry between the first die 110 and the second die 120 so that it can move toward the front end of the die part. Therefore, it is desirable that the first guide part 212 extends from one end of the support part 211 so as to be perpendicular to the support part 211.

The second guide part 213 corresponds to the other side of the die part and is formed extending from the other end of the support part 211. That is, the second guide part 213 is formed to face the first guide part 212.

The second guide part 213, like the first guide part 212, guides the main slurry so that it can move toward the front end of the die part. Therefore, the second guide part 213 is preferably extended from the other end of the support part 211 such that it is perpendicular to the support part 211 while being parallel to the first guide part 212.

Consequently, the main slurry supplied through the manifold 111 is guided by the support part 211, the first guide part 212, and the second guide part 213, moving toward the front end of the die part for discharge.

The sub-shim plate 220 guides the movement of the sub-slurry and separates it from the main slurry for discharge.

The sub-shim plate 220 of the present disclosure is provided to cover a portion of the manifold 111 while being in contact with the main shim plate 210, as shown in FIG. 6.

The sub-shim plate 220 of the present disclosure is positioned between the first guide part 212 and the second guide part 213.

Specifically, the sub-shim plate 220 couples with the die part by abutting the first guide part 212 and the second guide part 213 of the main shim plate 210, and covers a portion of the manifold 111 via its lower surface.

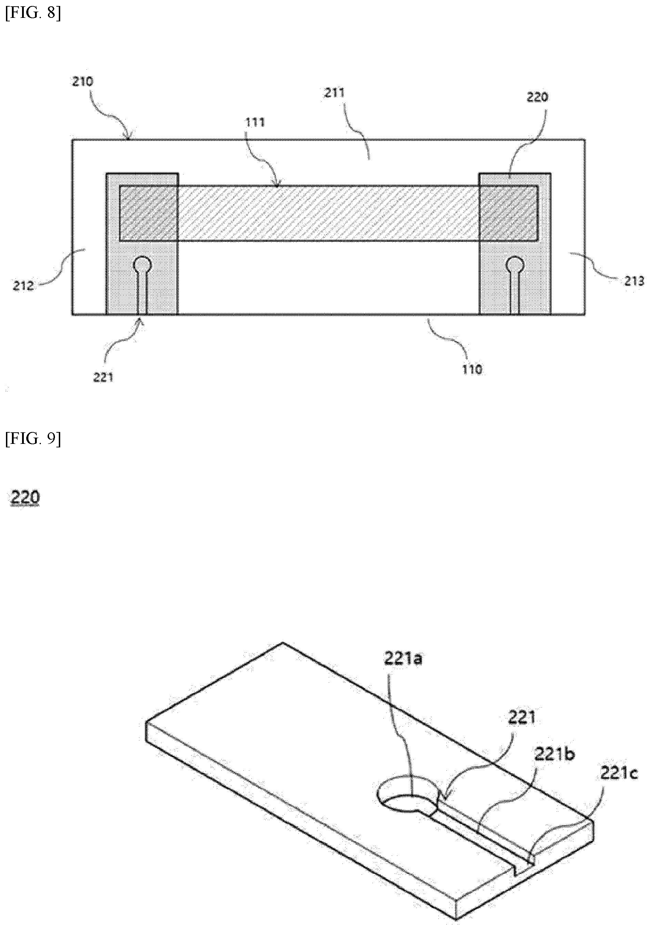

FIG. 8 is a plan view of the shim part and first die 110 of FIG. 7, with the covered portion of the manifold 111 shown in dashed lines.

As shown in FIG. 8, the manifold 111 is covered at both ends by the sub-shim plate 220 based on the longitudinal direction of the slot die device.

Due to the coupling between the sub-shim plate 220 and the first die 110, the main slurry does not leak out through the coupling area between the sub-shim plate 220 and the first die 110. Therefore, the main slurry cannot leak through the minute gap between the sub-shim plate 220 and the main shim plate 210 where they are in contact.

The sub-shim plate 220 includes a guide groove 221 through which the sub-slurry can move.

The guide groove 221 is formed on one surface of the sub-shim plate 220 that does not face the manifold 111, as shown in FIGS. 5 to 7. That is, the guide groove 221 is formed in a portion not overlapping the manifold 111 so that the main slurry and the sub-slurry do not mix with each other.

FIG. 9 is a perspective view of the sub-shim plate 220 included in the slot die device according to the first embodiment of the present disclosure.

The guide groove 221 included in the sub-shim plate 220 comprises an inlet part 221a, a moving part 221b, and a discharge part 221c, as shown in FIG. 9.

The inlet part 221a serves as the manifold 111 of the die part and is the area where the sub-slurry is introduced.

Although not shown, the externally supplied sub-slurry enters through the first die 110 or second die 120 at a position corresponding to the inlet part 221a.

The moving part 221b is directly connected to the inlet part 221a and guides the movement of the sub-slurry. The sub-slurry introduced into the inlet part 221a moves to the moving part 221b.

The discharge part 221c is included at the end of the moving part 221b and is the area where the sub-slurry is discharged externally. The sub-slurry that has moved through the moving part 221b is discharged through the discharge part 221c included at the end of the moving part 221b.

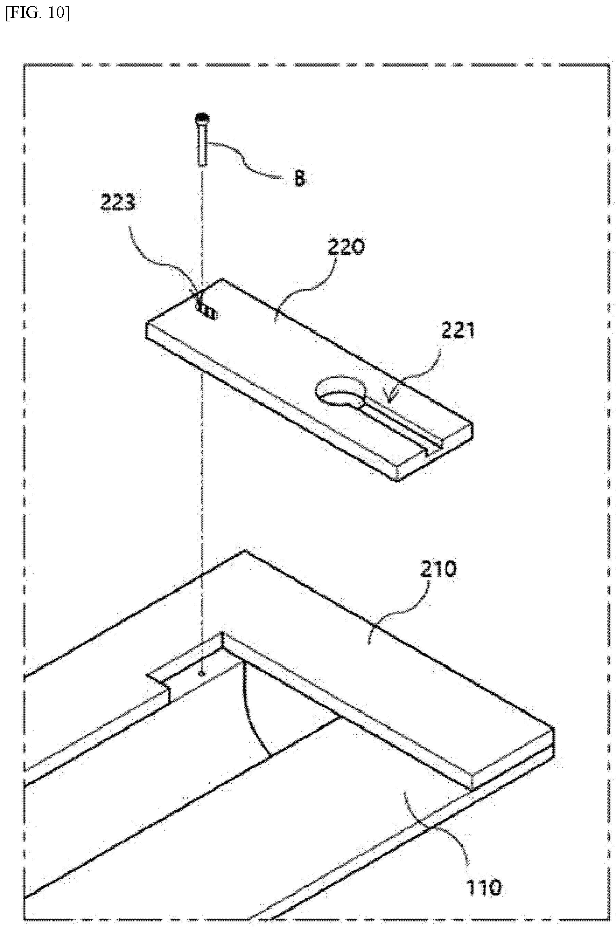

FIG. 10 is a schematic diagram briefly showing the coupling between the sub-shim plate 220 and the first die 110.

The sub-shim plate 220 includes a coupling hole 223 at an end opposite the guide groove 221 position, as shown in FIG. 10.

The sub-shim plate 220 is fixed to the die part via a coupling member B that passes through the coupling hole 223 and couples to the first die 110.

The coupling member B may be, for example, a bolt.

The coupling hole 223 is preferably formed to extend unidirectionally so that it can be guided and slid by the coupling member B. More preferably, the coupling hole 223 extends in the width direction of the slot die device. Therefore, the sub-shim plate 220 can be guided by the coupling hole 223 and its position adjusted front-to-back.

Even while sliding to adjust the position of the sub-shim plate 220, the sub-shim plate 220 maintains a state where it covers the end part of the manifold 111. Therefore, the slot die device of the present disclosure prevents leakage of the main slurry at the coupling portion between the sub-shim plate 220 and the main shim plate 210.

The slot die device of the present disclosure guides and discharges the main slurry via the first guide part 212 and the second guide part 213 of the main shim plate 210, while simultaneously guiding and discharging the sub-slurry through the guide groove 221 of the sub-shim plate 220.

### (Second embodiment)

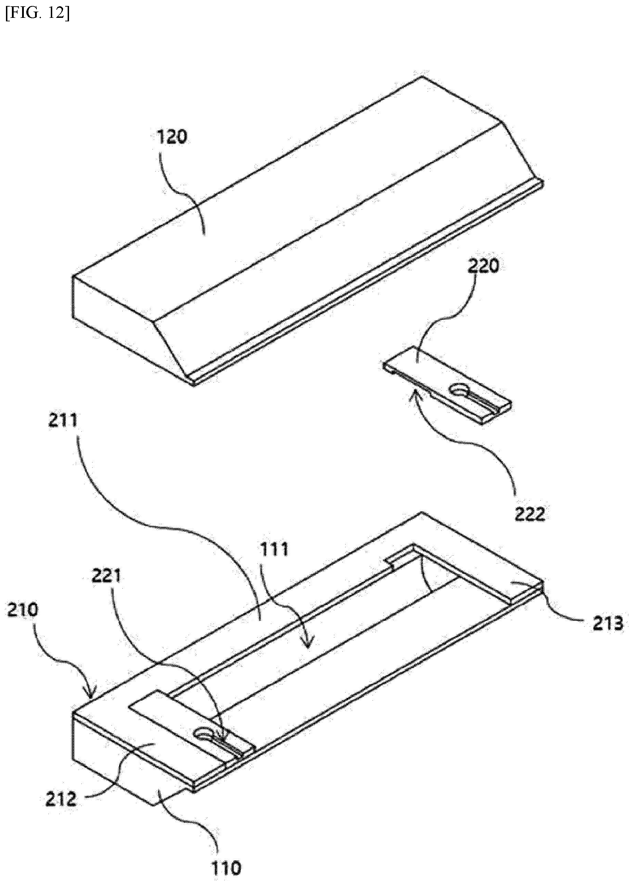

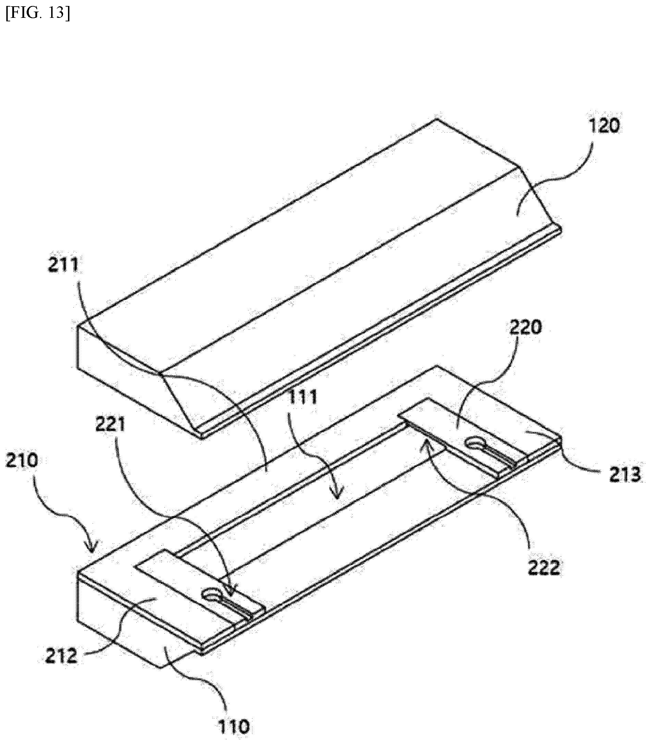

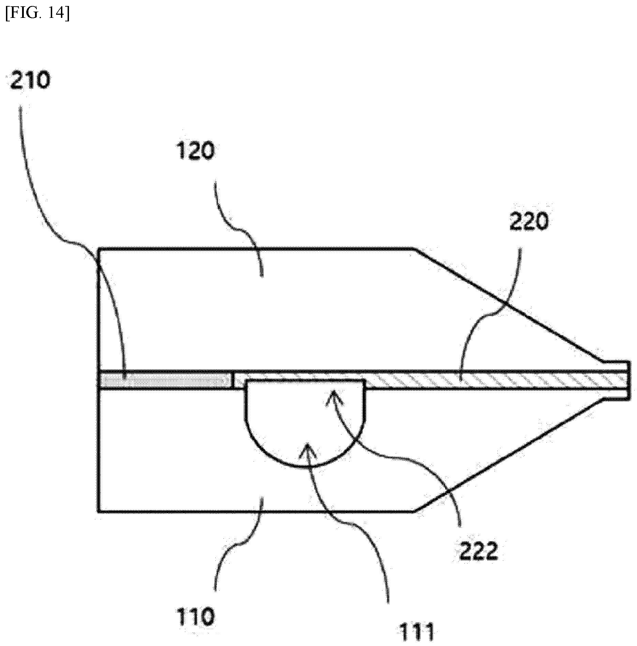

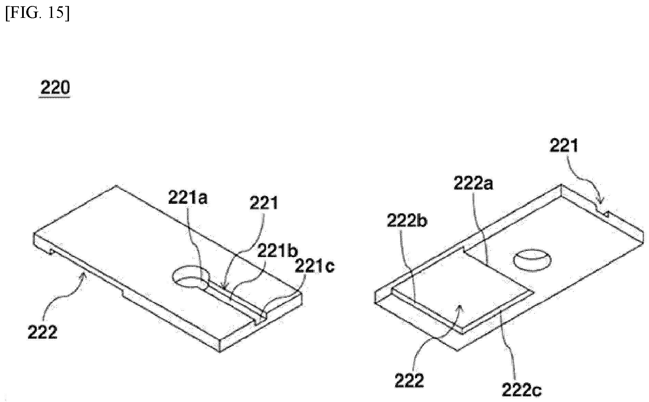

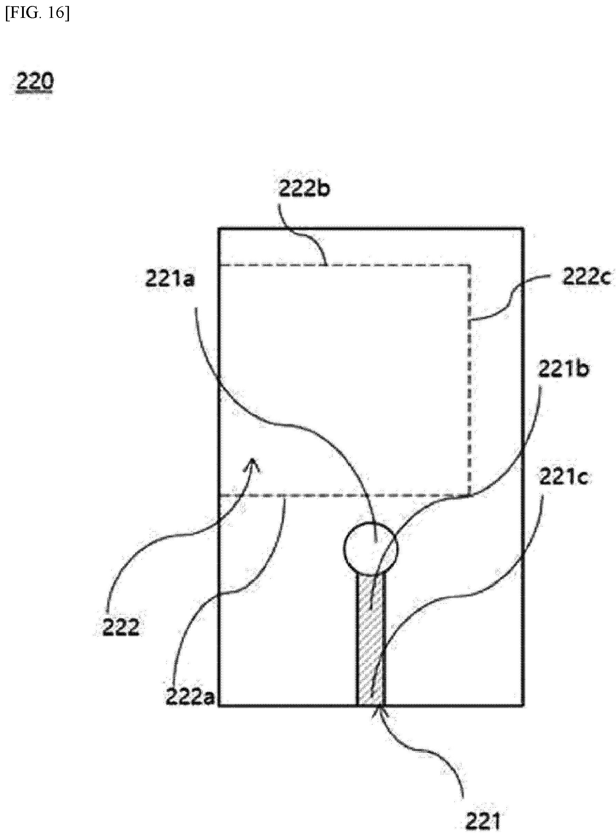

FIG. 11 is one example of an exploded perspective view of the slot die device according to the second embodiment of the present disclosure. FIG. 12 is another example of an exploded perspective view of the slot die device according to the second embodiment of the present disclosure. FIG. 13 is yet another example of an exploded perspective view of the slot die device according to the second embodiment of the present disclosure. FIG. 14 is a cross-sectional view of the slot die device according to the second embodiment of the present disclosure, cut in the width direction. FIG. 15 is a perspective view and a bottom perspective view of the sub-shim plate 220 included in the slot die device according to the second embodiment of the present disclosure, and FIG. 16 is a plan view of the sub-shim plate 220 of FIG. 15.

The slot die device according to the second embodiment of the present disclosure further includes a buffer groove 222 on one surface of the sub-shim plate 220 to supplement the flow rate of the main slurry.

The sub-shim plate 220 includes a buffer groove 222 on a surface facing the manifold 111, as shown in FIGS. 11 through 15. That is, the sub-shim plate 220 includes the buffer groove 222 on a surface opposite to the surface where the guide groove 221 is formed.

The buffer groove 222 is formed by step-processing a portion of the sub-shim plate 220 corresponding to the manifold 111. Therefore, the buffer groove 222 has a step surface formed by the step-processing.

Specifically, the buffer groove 222 includes a front step surface 222a formed at a position corresponding to the front end of the die part, a rear step surface 222b facing the front step surface 222a, and a side step surface 222c connecting the front step surface 222a and the rear step surface 222b.

The buffer groove 222 is formed in a rectangular shape corresponding to the manifold 111 configuration, as shown in FIG. 15.

FIG. 14 shows a cross-sectional view of the slot die device according to the second embodiment, cut in the width direction. Specifically, FIG. 14 is a cross-sectional view of the slot die device cut such that the cutting line passes through the buffer groove 222 of the sub-shim plate 220.

The buffer groove 222 is formed in a portion of one surface of the sub-shim plate 220 facing the manifold 111 that covers the manifold 111. Therefore, the buffer groove 222 complements the upper space of the manifold 111 that could be covered and hidden by the sub-shim plate 220.

As shown in FIG. 14, the buffer groove 222 supplements the upper space of the manifold 111.

The buffer groove 222 has a shape with one side open, as shown in FIG. 15. That is, the buffer groove 222 has three step surfaces excluding the open side.

Specifically, the buffer groove 222 is open on the side facing the center of the manifold 111.

Therefore, the main slurry flowing into the buffer groove 222 through the manifold 111 can move toward the front end of the die part through the open side of the buffer groove 222.

### (Third embodiment)

The slot die device according to the third embodiment of the present disclosure modifies the shape of the buffer groove 222 included in the sub-shim plate 220 of the slot die device of the second embodiment.

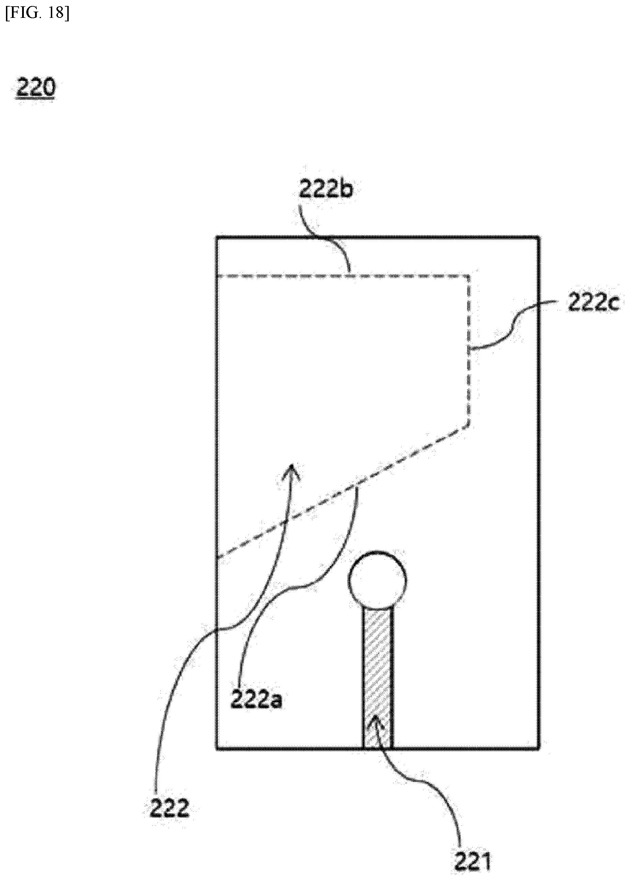

FIG. 17 is a bottom perspective view of the sub-shim plate 220 included in the slot die device according to the third embodiment of the present disclosure, and FIG. 18 is a plan view of the sub-shim plate 220 of FIG. 17.

The buffer groove 222 includes three step surfaces excluding an open side. In particular, it is characterized in that one of the three step surfaces is inclined in a horizontal direction.

The buffer groove 222 includes a front step surface 222a formed at a position corresponding to the front end of the die part, a rear step surface 222b facing the front step surface 222a, and a side step surface 222c connecting the front step surface 222a and the rear step surface 222b.

The front step surface 222a is inclined in the horizontal direction, as shown in FIGS. 17 and 18. That is, the front step surface 222a is inclined such that the gap between the front step surface 222a and the rear step surface 222b increases toward the open side.

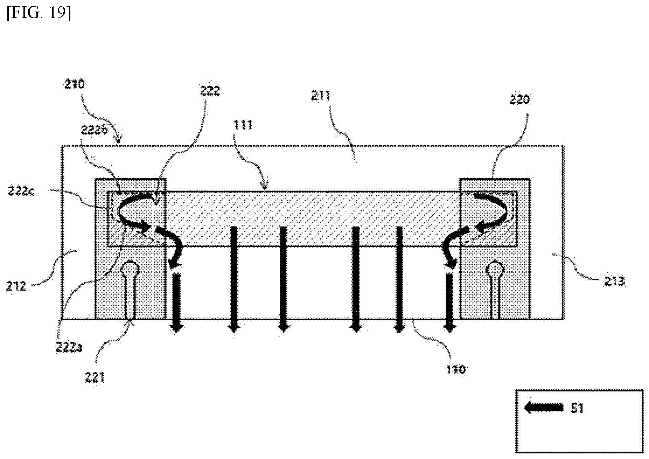

FIG. 19 is a plan view of the first die 110 and the shim part in the slot die device according to the third embodiment of the present disclosure.

Based on the width direction of the slot die device, the width of the buffer groove 222 may be less than or equal to the width of the manifold 111.

The main slurry supplied from the manifold 111 fills the step surface of the buffer groove 222 at the edge of the manifold 111. Thereafter, it may move forward along the slope of the front step surface 222a of the buffer groove 222 toward the front of the die part. At this time, the slope of the front step surface 222a compensates for the flow of the main slurry restricted by the sub-shim plate 220 and facilitates the flow of the main slurry more favorably.

### (Fourth embodiment)

The slot die device according to the fourth embodiment is characterized in that the width of the buffer groove 222 is increased compared to the width of the buffer groove 222 included in the slot die device of the third embodiment.

FIG. 20 is a plan view of the first die 110 and the shim part in the slot die device according to the fourth embodiment of the present disclosure.

The width of the buffer groove 222 exceeds the width of the manifold 111 in the width direction of the slot die device, as shown in FIG. 20.

The main slurry supplied from the manifold 111 begins to fill the buffer groove 222 at the edge of the manifold 111. Subsequently, the main slurry moves toward the front step surface 222a of the buffer groove 222 and can move forward along the slope of the front step surface 222a toward the front of the die part. At this time, the slope of the front step surface 222a compensates for the flow of the main slurry restricted by the sub-shim plate 220 and facilitates the flow of the main slurry more favorably.

The slot die device of the fourth embodiment is advantageous over the slot die device of the third embodiment in terms of the flow rate of the main slurry because the front step surface 222a of the buffer groove 222 is positioned further forward.

The present disclosure has been described in more detail above with reference to the drawings and embodiments. However, it should be understood that the configurations described in the drawings or embodiments are only one embodiment of the disclosure and do not represent all of the technical ideas of the disclosure, and that there may be various equivalents and modifications that may be substituted for them at the time of filing the present application.

### [Description of Reference Numerals]

10: (PRIOR ART) UPPER DIE
20: (PRIOR ART) LOWER DIE
30: (PRIOR ART) MAIN SHIM PLATE
40: (PRIOR ART) SUB-SHIM PLATE
50: (PRIOR ART) MAIN DISCHARGE PORT
60: (PRIOR ART) SUB DISCHARGE PORT
70: (PRIOR ART) MANIFOLD
80: (PRIOR ART) COUPLING HOLE
90: (PRIOR ART) COUPLING MEMBER
110: FIRST DIE
111: MANIFOLD
120: SECOND DIE
210: MAIN SHIM PLATE
211: SUPPORT PART
212: FIRST GUIDE PART
213: SECOND GUIDE PART
220: SUB-SHIM PLATE
221: GUIDE GROOVE
221a: INLET PART
221b: MOVING PART
221c: DISCHARGE PART
222: BUFFER GROOVE
222a: FRONT STEP SURFACE
222b: REAR STEP SURFACE
222c: SIDE STEP SURFACE
223: COUPLING HOLE
B: COUPLING MEMBER
S1: MAIN SLURRY

## Claims

1. A slot die device for simultaneously discharging main slurry and sub-slurry, comprising:
a die part comprising a first die comprising a manifold to which a main slurry is supplied and a second die coupled to the first die; and
a shim part interposed between the first die and second die, forming a gap between the first die and second die through which slurry is discharged, wherein
the shim part comprises:
a main shim plate guiding a movement of the main slurry; and
at least one sub-shim plate guiding a movement of the sub-slurry, wherein
the sub-shim plate is provided to cover a portion of the manifold.

2. The slot die device of claim 1, wherein
the sub-shim plate comprises a guide groove, and the sub-slurry moves through the guide groove.

3. The slot die device of claim 2, wherein
the sub-shim plate further comprises a buffer groove on a surface facing the manifold, wherein
the buffer groove has one open side.

4. The slot die device of claim 3, wherein
the buffer groove is formed on a portion of one surface of the sub-shim plate facing the manifold that covers the manifold.

5. The slot die device of claim 3, wherein
the buffer groove is formed by machining a portion of the sub-shim plate corresponding to the manifold to create a step.

6. The slot die device of claim 3, wherein
the buffer groove is formed on a surface of the sub-shim plate opposite to a surface where the guide groove is formed.

7. The slot die device of claim 3, wherein
the buffer groove comprises a front step surface formed at a position corresponding to a front end of the die part, and a rear step surface opposing the front step surface, wherein
the front step surface is inclined in a horizontal direction.

8. The slot die device of claim 7, wherein
a gap between the front step surface and the rear step surface increases toward the open side.

9. The slot die device of claim 1, wherein
the main shim plate comprises:
a support part corresponding to a rear end of the die part;
a first guide part corresponding to one side of the die part and formed extending from one end of the support part; and
a second guide part corresponding to the other side of the die part and formed extending from the other end of the support part, wherein
the sub-shim plate is positioned between the first guide part and the second guide part.

10. The slot die device of claim 1, wherein
the sub-shim plate is coupled to the first die in contact with the main shim plate.
